# EUROPEAN PATENT APPLICATION

(11) **EP 1 811 753 A1**
(43) Date of publication of application: **25.07.2007**
(21) Application number: 05793260.0
(22) Date of filing: 14.10.2005
(51) Int. Cl.: H04M 1/60

(54) **ELECTRONIC DEVICE HAVING HANDSFREE FUNCTIONS**

(30) Priority: 18.10.2004 JP 2004303141
(71) Applicant: Pioneer Corporation, Tokyo 153-8654 (JP)
(72) Inventor: YOSHINO, Miyuki,Pioneer Corporation, Kawagoe-shi, Saitama 350-8555 (JP); YAMASHITA, Rie,Pioneer Corporation, Kawagoe-shi, Saitama 350-8555 (JP); SATO, Hitoshi,Pioneer Corporation, Kawagoe-shi, Saitama 350-8555 (JP); TERAO, Arihito,Pioneer Corporation, Kawagoe-shi, Saitama 350-8555 (JP); MORITA, Kenji,Pioneer Corporation, Kawagoe-shi, Saitama 350-8555 (JP)
(74) Representative: HOFFMANN EITLE
(86) International application number: PCT/JP2005/018966
(87) International publication number: WO 2006/043482

(57) **Abstract**

When a TUNER receiving unit (12) detects alarm information, a controlling unit outputs an output-selection instruction that the TUNER receiving unit (12) is selected, to a speech selector (14), an output selector (15), and a call-interruption notifying unit (16). Upon receiving the output-selection instruction, the output selector (15) selects audio data input from the TUNER receiving unit (12) and outputs audio data input from the TUNER receiving unit (12) to the speech-output device (3), the call-interruption notifying unit (16) outputs prerecorded voice guidance to the speech selector (14), and the speech selector (14) selects the voice guidance and outputs it to a telephone set (7) via a telephone unit (13).

## Description

### TECHNICAL FIELD

The present invention relates to a handsfree-electronic device that is connected to a telephone set and that allows performing of communication without using a handset.

### BACKGROUND ART

Various technologies have been proposed to notify interruption of a call, when the call with a communication partner is interrupted during communication via a telephone line. For example, Patent Document 1 discloses a technology related to a communicating system in which, when a telephone set that is connected parallely or serially to a modem receives a call, that modem sends a modem-hold notification to a modem of a communication partner, for putting the communication with the modem of the communication partner on hold.

Patent Document 1: Published Japanese translation of a PCT application No. 2003-527772

### DISCLOSURE OF INVENTION

### PROBLEM TO BE SOLVED BY THE INVENTION

However, in recent years, a handsfree device is widely used in telephone sets. Such a telephone set is equipped with a microphone and a speaker. The microphone is used, instead of a handset, to input speech to the telephone set, and the speaker is used to output speech of the communication partner. Because the handsfree function allows communication with the communication partner without holding the telephone set in one's hand, a person driving a car can make a call using a mobile phone that is equipped with the handsfree function. Therefore, it is often the case that people install a car audio device or a car navigation device that has the handsfree function in their cars.

A conventional handsfree-electronic device (the car audio device and the car navigation device) can switch between speech from the telephone set (mobile phone) and speech from the electronic device and output the speech to one speaker. When an emergency broadcast is received from Radio Data System (RDS) or Digital Audio Broadcasting (DAB), or when guidance information is output from the car navigation device, the output to the speaker is switched from the speech from the telephone set to the speech from the electronic device. Therefore, the call with the partner is interrupted.

A user, who is making a call with a conventional handsfree-electronic device, becomes aware of interruption during the call when output to the speaker is switched. However, the communication partner has no way of knowing a reason behind the interruption, which is generally unintentional, of the call. The communication partner does not know whether the interruption of the call is caused by disconnection of the communication line due to a state of radio waves or due to off-hook state of the telephone set, or is caused by switching of the output to the speaker of the handsfree-electronic device. Therefore, when the conventional handsfree-electronic device is used for communication, there is a problem of anxiety or discomfort caused to the user by the interruption of the call due to switching of the output to the speaker of the handsfree-electronic device.

In the conventional technology disclosed in Patent Document 1, during the communication among the modems, when a call comes to a telephone set that is connected to the modem parallely or serially, the modem sends a modem-hold notification to a modem of the communication partner, for putting the communication with the modem of the partner on hold. However, the conventional technology does not disclose a technology for the conventional handsfree-electronic device that is related to interruption of a call due to a demand of a communication line or a different device than the telephone set is not disclosed. Therefore, in the conventional technology disclosed in Patent Document 1, it is not possible to notify the communication partner about the interruption of the call due to switching of output to the speaker of the conventional handsfree-electronic device. Inn other words, it is not possible to relieve the communication partner of anxiety or discomfort that is caused by the priority order of the interruption processing of the conventional handsfree-electronic device.

The present invention is achieved in view of the foregoing, and it is an object of the present invention to obtain a handsfree-electronic device that can notify interruption of the call to the communication partner when switching occurs from the handsfree function to a function of a device different than the telephone set during the call, using the handsfree function, and to obtain a method for switching that occurs in the handsfree-electronic device.

### MEANS FOR SOLVING PROBLEM

According to claim 1, a handsfree-electronic device is connected to a telephone set by a telephone unit, outputs speech that is input from the telephone set to a speech-output device, outputs speech input from a speech-input device to the telephone set, and allows communication with a communication partner without using a handset. The handsfree-electronic device includes an output selector that selects speech from the telephone unit and outputs selected speech to the speech-output device in response to an output-selection instruction to select the telephone unit, and selects speech from a different device, which is a device other than the telephone unit, and outputs selected speech to the speech-output device in response to another output-selection instruction to select the different device, a call-interruption notifying unit that outputs a voice guidance for notifying the communication partner that a call is interrupted, a speech selector that selects speech input from the speech-input unit and outputs selected speech to the telephone unit in response to the first output-selection instruction, and selects the voice guidance input from the call-interruption notifying unit and outputs the voice guidance to the telephone unit in response to the second output-selection instruction, a controlling unit that outputs, based on a predetermined priority order of the call through the telephone set and interruption from the different device, the second output-selection instruction to the output selector and the speech selector upon detecting interruption with higher priority than the call through the telephone set, and outputs the first output-selection instruction to the output selector and the speech selector upon detecting interruption with lower priority than the call through the telephone set.

According to claim 6, an output switching method applied to a handsfree-electronic device that is connected to a telephone set by a telephone unit, outputs speech that is input from the telephone set to a speech-output device, outputs speech input from a speech-input device to the telephone set, and allows communication with a communication partner without using a handset, and switches between outputs from the telephone unit and a different device, which is a device other than the telephone unit, includes a step of controlling output by outputting an output-selection instruction indicating selection of the different device, upon detecting an interruption which is set to a higher priority rank than a call through the telephone set, and by outputting an output-selection instruction indicating selection of the telephone unit upon detecting an interruption which is set to a lower priority rank than a call through the telephone set; a step of selecting output in which upon receiving the output-selection instruction to select output from the telephone unit, speech from the telephone unit is selected and output to the speech-output device, and upon receiving the output-selection instruction indicating selection of the different device, the speech from the different device set is selected and output to the speech-output device; a step of outputting call-interruption guidance in which a voice guidance is generated to notify the communication partner that the call is interrupted; and a step of selecting speech in which upon receiving the output-selection instruction to select the telephone unit, the speech input from the speech-input device is selected and output to the telephone unit, and upon receiving the output-selection instruction to select the different device, the voice guidance generated at the step of outputting call-interruption guidance is selected and output to the telephone unit.

### BRIEF DESCRIPTION OF DRAWINGS

[Fig. 1] Fig. 1 is a block diagram of a configuration of a communication system that uses a handsfree-electronic device according to the present invention.
[Fig. 2] Fig. 2 is a flowchart for explaining operation of the handsfree-electronic device according to the present invention.

### EXPLANATIONS OF LETTERS OR NUMERALS

- 1: Car audio
- 3: Speech-output device
- 5: Speech-input device
- 7, 9: Telephone set
- 10: Controlling unit
- 11: Displaying unit
- 12: TUNER receiving unit
- 13: Telephone unit
- 14: Speech selector
- 15: Output selector
- 16: Call-interruption notifying unit

### BEST MODE(S) FOR CARRYING OUT THE INVENTION

Exemplary embodiments of the present invention are explained in detail below with reference to the accompanying drawings.

### [Outline and characteristics]

The handsfree-electronic device according to the present invention sets an order of priority of interruption processing in advance. When an interruption process, which has higher priority order than the handsfree function, occurs, the speech of the device that is the object of interruption process is output to a speech output device, and prerecorded voice guidance is output to a telephone set to notify interruption of a call. Thus, interruption of the call is notified to a communication partner because the interruption process has higher priority order than the handsfree function.

### Embodiments

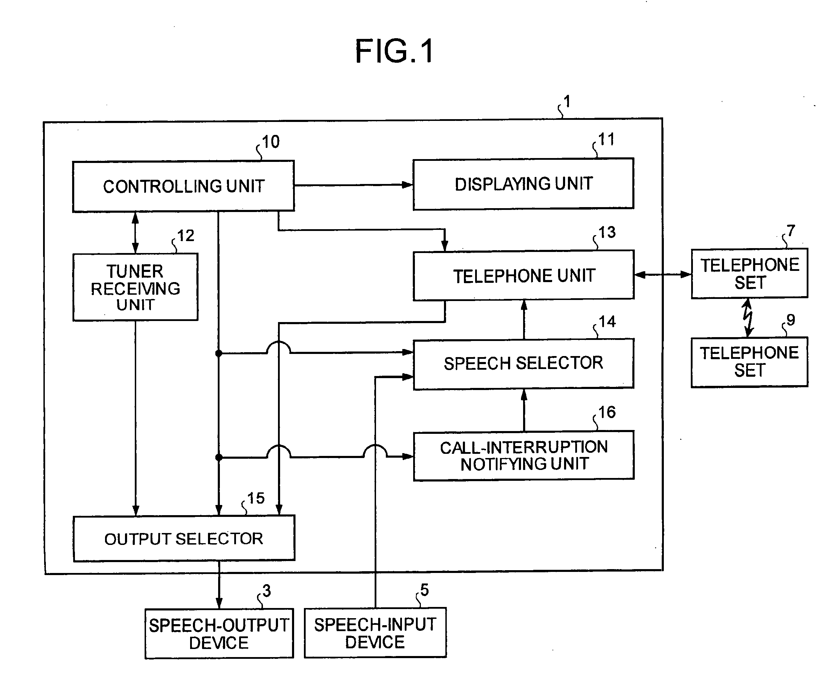

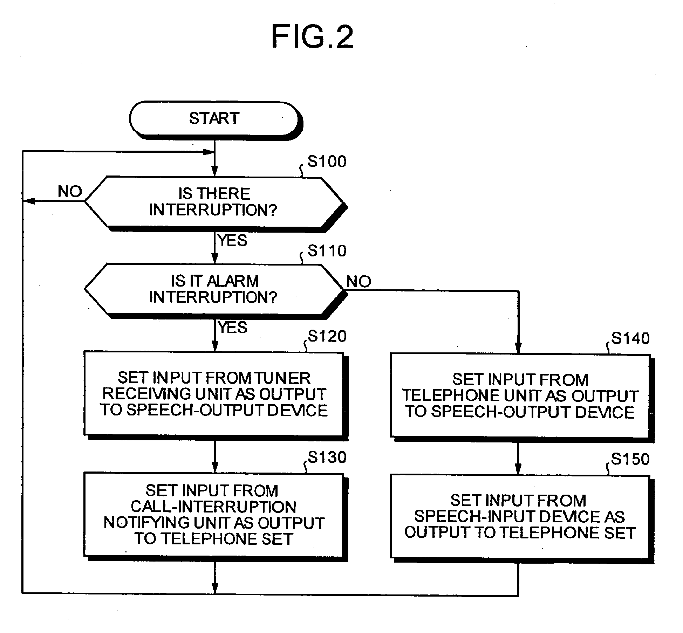

Exemplary embodiments according to the present invention are explained with reference to Figs. 1 and 2. Fig. 1 is a block diagram of a configuration of a communication system that uses a car audio device as a handsfree-electronic device according to an embodiment of the present invention. The communication system, shown in Fig. 1, includes a car audio 1 as a handsfree-electronic device, telephone sets 7 and 9, a speech-input device 5 such as a microphone, and a speech-output device 3 such as a speaker. The telephone set 7 connected to the car audio 1 is a common mobile telephone, and the telephone set 9 capable of communicating with the telephone set 7 can be a mobile telephone or a landline telephone.

The car audio 1 is connected to the telephone set 7. When the telephone set 7 and the telephone set 9 are in communication, the car audio 1 has a handsfree function of outputting speech input from the speech-input device 5 to the telephone set 7 and outputting speech received by the telephone set 7 from the telephone set 9 to the speech-output device 3. On the other hand, when the telephone set 7 is in a standby state (not in communication), the car audio 1 outputs audio data from radio broadcasting systems such as RDS and DAB, and audio data received by an external or internal TV tuner, not shown in the figure, to the speech-output device 3. When an emergency broadcast provided by RDS and DAB related to life threatening crisis is received while the telephone set 7 and the telephone set 9 are in communication (during handsfree communication), the car audio 1 switches output to the speech-output device 3, from speech input from the telephone set 7 to the emergency broadcast from RDS and DAB, and also outputs a voice guidance to the telephone set 7 to notify that the call is interrupted.

The car audio 1 includes a controlling unit 10, a displaying unit 11, a TUNER receiving unit 12, a telephone unit 13, a speech selector 14, an output selector 15, and a call-interruption notifying unit 16.

The controlling unit 10, configured with a micro processor and the like, controls each component inside the car audio 1, and outputs an output-selection instruction to the speech selector 14, the output selector 15, and the call interruption notifying unit 16. The output-selection instruction indicates whether to select the TUNER receiving unit 12 or the telephone unit 13 based on a predetermined order of priority.

The TUNER receiving unit 12 is an ordinary receiver that receives radio waves from RDS and DAB and the like. The TUNER receiving unit 12 generates audio data by processing the radio waves received from RDS and DAB and the like, and outputs the generated audio data to the output selector 15.

RDS and DAB transmit audio data and data related to interruption information including emergency broadcast, traffic information, information regarding accidents and the like. The TUNER receiving unit 12 detects a category of the interruption information at the time of processing radio waves received from RDS and DAB, and outputs the result of the detection to the controlling unit 10.

The telephone unit 13 functions as an interface with the telephone set 7. In other words, the telephone unit 13 connects the car audio 1 and the telephone set 7, and outputs speech that is input from the telephone set 7 to the output selector 15, and outputs speech input from the speech selector 14 to the telephone set 7. The telephone set 7 can be connected to the car audio 1 through wired connection by using a cable, or through wireless connection using Bluetooth (Registered trademark) and the like.

The output selector 15 selects, based on an output-selection instruction input from the controlling unit 10, the audio data input from the TUNER receiving unit 12 or speech input from the telephone unit 13, and outputs one of the selected audio data and the speech to the speech-output device 3.

The call-interruption notifying unit 16, upon receiving the output-selection instruction to select the TUNER receiving unit 12 from the controlling unit 10, outputs voice guidance to the speech selector 14 notifying that the call between the telephone set 7 and the telephone set 9 is interrupted. The voice guidance is recorded speech data, for example, an announcement saying "the call is interrupted due to emergency broadcast" notifying interruption of the call to a communication partner, who is using the telephone set 9. Upon receiving the output-selection instruction to select the TUNER receiving unit 12 from the controlling unit 10, the call-interruption notifying unit 16 plays recorded voice data, and outputs the voice data to the telephone unit 13.

The speech selector 14 selects, based on the output-selection instruction input from the controlling unit 10, speech input from the speech-input device 5 or the voice guidance input from the call-interruption notifying unit 16, and outputs one of the selected audio data and the speech to the telephone unit 13.

The displaying unit 11 is configured with an OEL, an LCD, or the like, and is a unit that displays information such as reception frequency of a radio broadcast from RDS, DAB and the like received through the TUNER receiving unit 12, and TV channel information received by a not shown TV tuner or the like, which is attached externally or internally to the car audio 1. Images from the TV tuner or the like are displayed on a not shown monitor that is configured with an external crystal display and the like.

Operation of the car audio 1, which is the handsfree-electronic device according to a first embodiment of the present invention, is explained with reference to a flowchart shown in Fig. 2. The output selector 15 selects speech from the telephone set 7, which is input via the telephone unit 13 and outputs to the speech-output device 3, while the speech selector 14 selects speech input from the speech-input device 5, and outputs to the telephone set 7 via the telephone unit 13. Thus, communication between the telephone set 7 and the telephone set 9 is facilitated by the handsfree function of the car audio 1. Alarm information (ALARM specified by RDS, DAB), which indicates emergency broadcast of information related to life threatening crisis, is set to be the highest in the priority order of interruption process in the controlling unit 10 among RDS, DAB interruption information input from the TUNER receiving unit 12. Interruption process of the handsfree function is set to be next to the alarm information in the priority order.

The TUNER receiving unit 12 outputs the audio data obtained by processing radio waves received from RDS and DAB to the output selector 15. Further, the TUNER receiving unit 12 detects the category of the interruption information at the time of processing of radio waves received from RDS and DAB, and outputs detected category of the interruption information to the controlling unit 10. Upon receiving the category of the interruption information, the controlling unit 10 judges whether the category of the interruption information is the alarm information (steps S100 and S110).

If the category of the interruption information is the alarm information, the controlling unit 10 sets input from the TUNER receiving unit 12 as output to the speech-output device 3, and sets the voice guidance of the call-interruption notifying unit 16 as output to the telephone set 7 (steps S120 and S130).

Specifically, the controlling unit 10 outputs the output-selection instruction, indicating that the TUNER receiving unit 12 is selected to the speech selector 14 the output selector 15 and the call interruption notifying unit 16.

When the output selector 15 receives the output-selection instruction indicating that the TUNER receiving unit 12 is selected, the output selector 15 selects the audio data from the TUNER receiving unit 12 and outputs the audio data to the speech-output device 3. Thus, the emergency broadcast from RDS or DAB is output from the speech-output device 3.

Upon receiving the output-selection instruction of selecting the TUNER receiving unit 12, the call-interruption notifying unit 16 plays and outputs prerecorded voice guidance to the speech selector 14.

Upon receiving the output-selection instruction of selecting the TUNER receiving unit 12, the speech selector 14 selects the voice guidance from the call-interruption notifying unit 16 and outputs the voice guidance to the telephone unit 13.

Thus, the telephone unit 13 outputs the voice guidance from the speech selector 14 to the telephone set 7 the voice guidance is sent from the telephone set 7 to the telephone set 9 via a communication line, and the user of the telephone set 9 (the communication partner of the telephone set 7) is able to know that the communication with the telephone set 7 is interrupted due to emergency broadcast.

On the other hand, if the category of the interruption information is not the alarm information, the controlling unit 10 sets input from the telephone unit 13 as output to the speech-output device 3 and sets input from the speech-input device 5 as output to the telephone set 7 (steps S140 and S150).

Specifically, the controlling unit 10 outputs the output-selection instruction of selecting the telephone unit 13 to the speech selector 14 the output selector 15 and the call-interruption notifying unit 16.

Upon receiving the output-selection instruction of selecting the telephone unit 13, the output selector 15 selects and outputs the speech data from the telephone unit 13 to the speech-output device 3. Thus, speech from the telephone set 7, input via the telephone unit 13, that is, the speech from the communication partner is output from the speech-output device 3.

Upon receiving the output-selection instruction of selecting the telephone unit 13, the speech selector 14 selects and outputs speech input from the speech-input device 5. The telephone unit 13 outputs the speech input from the speech selector 14, that is, input from input device to the telephone set 7. Upon receiving the output-selection instruction of selecting the telephone unit 13, the call-interruption notifying unit 16 stops playing the voice guidance.

Thus, the speech input from the speech-input device 5 is output to the telephone set 7 via the telephone unit 13, and the speech input from the telephone set 7 is output to the speech-output device 3 via the telephone unit 13, and communication between the telephone set 7 and the telephone set 9 is possible through the handsfree function, that is, communication is possible with the communication partner who is using the telephone set 9.

Thus, in the embodiment, when the category of emergency information detected by the TUNER receiving unit 12 is the alarm information, the controlling unit 10 outputs the output-selection instruction to the speech selector 14 the output selector 15, and the call-interruption notifying unit 16. Upon receiving the output-selection instruction of selecting the TUNER receiving unit 12, the output selector 15 selects and outputs audio data from the TUNER receiving unit 12 to the speech-output device 3, the call-interruption notifying unit 16 outputs the prerecorded voice guidance to the speech selector 14, the speech selector 14 selects and outputs the voice guidance input from the call-interruption notifying unit 16 to the telephone unit 13, and the telephone unit 13 outputs the voice guidance input to the telephone set 7. Thus, although the output from the device to the speech-output device 3 is switched from speech of the telephone set 7 to the audio data of the TUNER receiving unit 12, call interruption can be notified to the communication partner through speech, so that anxiety or discomfort felt by the communication partner due to unintentional call interruption can be eliminated.

In the embodiment, when the category of emergency information detected by the TUNER receiving unit 12 is the alarm information, the controlling unit 10 outputs the output-selection instruction to the speech selector 14, the speech selector 14 is made to select the voice guidance input from the call-interruption notifying unit 16, and the voice guidance is output to the telephone set 7 via the telephone unit 13. However, it is possible to output emergency broadcast received from the TUNER receiving unit 12 to the telephone set 7 after outputting the voice guidance to the telephone set 7.

In such a case, the output from the TUNER receiving unit 12, shown in Fig. 1, is input to the speech selector 14, and is stored in a memory unit in the speech selector 14 (not shown), which includes flash memory and the like. The controlling unit 10 outputs the output-selection instruction of selecting the TUNER receiving unit 12 to the speech selector 14, and causes the TUNER receiving unit 12 to output the voice guidance from the call-interruption notifying unit 16 to the telephone set 7. After the contents of the voice guidance have been notified to the communication partner, the controlling unit 10 outputs the output-selection instruction of selecting the TUNER receiving unit 12 to the speech selector 14, such that the speech selector 14 selects the emergency broadcast received and stored in the memory unit by the TUNER receiving unit 12.

Thus, after the call interruption is notified to the communication partner through speech, it is also possible to notify the communication partner of the emergency broadcast that is received at present. Therefore, it is possible to eliminate anxiety or discomfort felt by the communication partner due to unintentional call interruption and to notify the emergency broadcast that is received at present.

Further, the controlling unit 10 outputs the output-selection instruction of selecting the TUNER receiving unit 12 to the displaying unit 11. Thus, it is possible that the displaying unit 11 displays that the output of the speech-output device 3 has been switched from the speech from the telephone set 7 to the emergency broadcast received by the TUNER receiving unit 12.

In the embodiment, the TUNER receiving unit 12 that receives radio waves from RDS and DAB is a unit different than the telephone set, and a case of an emergency broadcast received from RDS or DAB is explained with reference to an example. However, the device different than the telephone set is not limited to the TUNER receiving unit 12. For example, the TUNER receiving unit 12 can be replaced by a car navigation device. When the controlling unit 10 detects interruption by the car navigation device, giving guidance information, the controlling unit 10 can output an output selection signal indicating selection of the car navigation unit. In such a case, upon receiving the output-selection signal indicating selection of the car navigation unit, the output selector 15 outputs the guidance information from the car-navigation device to the speech-output device 3, the call-interruption notifying unit 16 plays and outputs the voice guidance to the speech selector 14, and the speech selector 14 outputs the voice guidance to the telephone unit 13. Thus, even when output from the device to the speech-output device 3 is switched from speech of the telephone set 7 to the voice guidance of the car navigation device, call interruption can be notified to the communication partner through speech, and anxiety or discomfort felt by the communication partner due to unintentional call interruption can be eliminated.

Further, in the embodiment, the explanation is given about an example in which the alarm information in the emergency broadcast from the TUNER receiving unit 12 is set at the highest priority rank and the handsfree function is set at the second priority rank, next to the alarm information. However, priority ranking is not limited to the example. For example, it is possible to include a plurality of devices such as the TUNER receiving unit 12, the car navigation device, a rear view camera as the devices different from the telephone set. Interruption from the devices, for example, the interruption information from the TUNER receiving unit 12, the guidance information from the car navigation system, and interruption image display of the rear view camera displayed on the displaying unit 11, and the like are set on a higher priority in advance than the handsfree function. When output from the devices are to replace the handsfree function, the speech selector 14 selects the voice guidance and the voice guidance can be output to the telephone set via the telephone unit.

Moreover, when a telephone, including a function of notifying state of a battery or a state of communication waves through built in Bluetooth (registered trademark) is used as the telephone set, the controlling unit 10 acquires information about the state of a battery or a state of communication waves of the telephone set 7, and if the state of the battery or a state of communication waves is lower than a predetermined level, the output-selection instruction of selecting the voice guidance of the call-interruption notifying unit 16 is output to the speech selector 14 and the voice guidance can be output to the telephone set 7. In such a case, if the contents of the voice guidance indicate that the call is interrupted due to bad service state of the telephone set 7, it is possible to notify the communication partner that the call may be interrupted.

When the state of the battery or a state of communication waves is lower than a predetermined level, if measures are taken such as outputting a beep or displaying remaining capacity of the batteries and bad service state of the communication waves on the displaying unit 11, it is possible to notify to a user of the telephone set 7 that the call may be interrupted.

A priority selection menu can be displayed on the displaying unit 11 by the controlling unit 10 to allow a user to set priority ranking.

The devices different than the telephone set are not limited to the devices installed inside the car, these can be, for example, external devices such as interphone. In such a case, a provision can be made for an interface that is connected to the external device through wired or wireless connections. Interruption such as a call from the interphone via the interface is input to the controlling unit 10, and the interruption from the external devices is to be set to a higher priority rank than the handsfree function. When interruption from the external devices is detected, the controlling unit 10 can output the output-selection instruction that the external devices different than the telephone set are being selected to the speech selector 14, the output selector 15, and the call-interruption notifying unit 16.

## Claims

1. A handsfree-electronic device that is connected to a telephone set by a telephone unit, outputs speech that is input from the telephone set to a speech-output device, outputs speech input from a speech-input device to the telephone set, and allows communication with a communication partner without using a handset, the handsfree-electronic device comprising:
an output selector that selects speech from the telephone unit and outputs selected speech to the speech-output device in response to a first output-selection instruction to select the telephone unit, and selects speech from a different device, which is a device other than the telephone unit, and outputs selected speech to the speech-output device in response to a second output-selection instruction to select the different device;
a call-interruption notifying unit that outputs a voice guidance for notifying the communication partner that a call is interrupted;
a speech selector that selects speech input from the speech-input unit and outputs selected speech to the telephone unit in response to the first output-selection instruction, and selects the voice guidance input from the call-interruption notifying unit and outputs the voice guidance to the telephone unit in response to the second output-selection instruction; and
a controlling unit that outputs, based on a predetermined priority order of the call through the telephone set and interruption from the different device, the second output-selection instruction to the output selector and the speech selector upon detecting interruption with higher priority than the call through the telephone set, and outputs the first output-selection instruction to the output selector and the speech selector upon detecting interruption with lower priority than the call through the telephone set.

2. The handsfree-electronic device according to claim 1, wherein
the different device includes a receiving device that receives broadcasting waves from radio data system or digital audio broadcasting, and
among interruption information in the broadcasting waves, alarm information indicating emergency broadcasting is set to a higher priority rank than a call through the telephone set.

3. The handsfree-electronic device according to claim 1, wherein
the controlling unit outputs, after outputting the second output-selection instruction, an output-selection instruction indicating selection of output from the different device to the speech selector, and
the speech selector, upon receiving the output-selection instruction indicating selection of output from the different device selects and outputs output from the different device to the telephone unit.

4. The handsfree-electronic device according to claim 2, wherein
the controlling unit outputs, after outputting the second output-selection instruction, an output-selection instruction indicating selection of output from the different device to the speech selector, and
the speech selector, upon receiving the output-selection instruction indicating selection of output from the different device, selects and outputs output from the different device to the telephone unit.

5. The handsfree-electronic device according to claim 1, wherein
the different device includes a car navigation device, and
interruption due to guidance information from the car navigation device is set to a higher priority rank than the call through the telephone set.

6. An output switching method applied to a handsfree-electronic device that is connected to a telephone set by a telephone unit, outputs speech that is input from the telephone set to a speech-output device, outputs speech input from a speech-input device to the telephone set, and allows communication with a communication partner without using a handset, and switches between outputs from the telephone unit and a different device, which is a device other than the telephone unit, the output switching method comprising:
a step of controlling output by outputting an output-selection instruction indicating selection of the different device, upon detecting an interruption which is set to a higher priority rank than a call through the telephone set, and by outputting an output-selection instruction indicating selection of the telephone unit upon detecting an interruption which is set to a lower priority rank than a call through the telephone set;
a step of selecting output in which upon receiving the output-selection instruction to select output from the telephone unit, speech from the telephone unit is selected and output to the speech-output device, and upon receiving the output-selection instruction indicating selection of the different device, the speech from the different device set is selected and output to the speech-output device;
a step of outputting call-interruption guidance in which a voice guidance is generated to notify the communication partner that the call is interrupted; and
a step of selecting speech in which upon receiving the output-selection instruction to select the telephone unit, the speech input from the speech-input device is selected and output to the telephone unit, and upon receiving the output-selection instruction to select the different device, the voice guidance generated at the step of outputting call-interruption guidance is selected and output to the telephone unit.
